# EUROPEAN PATENT SPECIFICATION

(11) **EP 3 246 086 B1**
(45) Date of publication and mention of the grant of the patent: **06.05.2020**
(21) Application number: 15877829.0
(22) Date of filing: 15.01.2015
(51) Int. Cl.: B01F 1/00, B01D 19/00, B01F 3/04, C02F 1/20, C02F 1/72

(54) **GAS EXCHANGE DEVICE**
GASAUSTAUSCHVORRICHTUNG
DISPOSITIF D'ÉCHANGE DE GAZ

(43) Date of publication of application: 22.11.2017
(73) Proprietor: Kabushikikaisha Daieiseisakusho, Toyohashi-shi, Aichi 441-3104 (JP)
(72) Inventor: ITO, Norihito, Toyohashi-shi Aichi 441-3104 (JP); KOBAYASHI, Kazuyoshi, Toyohashi-shi Aichi 441-3104 (JP)
(74) Representative: Kuhnen & Wacker Patent- und Rechtsanwaltsbüro PartG mbB
(86) International application number: PCT/JP2015/050926
(87) International publication number: WO 2016/113877

(56) References cited:
- EP-A1- 0 359 965
- JP-A- 2006 043 681
- JP-A- 2006 314 857
- JP-A- 2008 086 896
- JP-A- 2013 027 814
- JP-C2- 138 320
- JP-U- S6 275 829
- US-A- 5 620 593
- US-A1- 2008 277 353
- US-B1- 6 251 167
- US-B1- 6 322 055

## Description

### Technical Field

The present invention relates to an apparatus for displacing a gas dissolved into a liquid with the other kind of gas.

### Background Art

The Applicant has thus far proposed an apparatus for clarifying water quality by supplying water drawn from a river or a lake etc. to a sealed container, supplying oxygen in the sealed container while keeping an inner pressure of the container at a level of no less than atmospheric pressure to displace nitrogen or carbon dioxide in water with oxygen and then sending back to a river or a lake etc. (Patent Documents 1 to 3).

These apparatuses of Patent Documents 1 to 3 adopt the configuration to enhance the efficiency of gas displacement by squirting water drawn from a river etc. in an upward direction at an upper portion inside the container as like a fountain, and making a steady water flow with a baffle plate, which is disposed on the inner wall of the container or the outer surface of the water supplying pipe, to form a curtain-shaped water screen flowing down in the container.

These apparatuses of Patent Documents 1 to 3 replace gas in water to discharge a displaced gas, and gradually decrease the oxygen concentration in the container. Therefore, the control is implemented so that the gas in the container may be discharged therefrom to open the upper gas discharging pipe.

### Prior Art Document

### Patent Literature

Patent Literature 1: WO 2005/077503
Patent Literature 2: Japanese Patent Laid-Open No.2008-86896
Patent Literature 3: Japanese Patent Laid-Open No.2013-27814

### Summary of the Invention

### Technical Problem

By the way, water suctioned from lake etc. with pump often contains suspended solids such as sludge and pieces of algae, which deposit on the uppermost baffle plate to form a bank that sometimes puddles on the baffle plate. The apparatus of Patent Document 3 makes the upper two baffle plates centripetally sloped down to make suspended solids fall down along the upper surface of the downward slope and prevent the deposition on the baffle plate, however, even in such case, it is likely to puddle.

Therefore, the conventional apparatus is likely to cause a gas discharging pipe to be immersed into such puddle and fail to implement secure discharge of gas.

Further, the apparatuses of Patent Documents 1 to 3 adopt the constitution of discharging a displaced gas near a liquid level. Thus it is likely that the elevation of the liquid level causes a discharging port to be submerged into a liquid, which might lead to the poor performance in displacing gas.

Accordingly, the present invention has made with the objective of providing a gas displacing apparatus capable of securely discharging gas from the container main body and with the further objective of providing a gas displacing apparatus capable of securely introducing gas into the container main body even if a liquid level is changed.

### Solution to Problem

To achieve the above objective, a gas displacing apparatus of the present invention comprises a container main body, a liquid supplying pipe for squirting liquid in an upward direction at an upper part inside said container main body, a liquid discharging pipe for discharging a liquid from a bottom part of said container main body, a plural stage of baffle plates disposed on the inner wall of said container main body, a pipe for supplying a displacing gas for supplying a displacing gas to an inner volume of said container main body and a gas discharging pipe for discharging gas from said container main body, wherein the apparatus replaces a gas dissolved into a liquid with said displacing gas by causing a liquid ejected from said liquid supplying pipe to flow down said baffle plate while keeping an inner pressure of said container main body at a level of no less than atmospheric pressure to form a curtain-like liquid screen in said container main body, and further comprises the following constitution:
(1) said gas discharging pipe is disposed in a manner that may expose its suction port to just below a rear surface of any one of said plural stage of baffle plates.

Here, the gas displacing apparatus of the present invention may further comprise the following constitution:
(2) said gas discharging pipe is disposed in a manner that may expose its suction port to just below the rear surface of the uppermost baffle plate.

The gas displacing apparatus of the present invention is capable of smoothly discharging gas without immersing a suction port in a puddle even if it puddles on the baffle plate in discharging gas from the container main body. In particular, the adoption of the constitution (2) allows us to discharge almost all amount of gas when a gas inside the container main body is to be displaced.

Moreover, the gas displacing apparatus of the present invention may further comprise the following constitution in order to achieve the further objective:
(3) an ejection port protector is arranged above said liquid supplying pipe with a prescribed gap, whereas said pipe for supplying a displacing gas is disposed in a manner that may expose its ejection port to an upper surface of the ejection port protector to feed said displacing gas from the circumference of said ejection port protector into said container main body.

The gas displacing apparatus of the present invention shields a liquid squirting in an upward direction from a liquid supplying pipe by use of the ejection port protector, which does not interfere with the discharge of the displacing gas from a discharging port of the displacing gas that faces the upper surface of the ejection port protector. Further, the discharging port of the displacing gas faces the upper surface of the ejection port protector, which is disposed above the liquid supplying pipe with a prescribed distance. Therefore, it would not be submerged in a liquid if a liquid level of the container main body is elevated. Accordingly, the displacing gas is introduced into the container main body with a prescribed pressure being maintained and filled in the container main body in such a condition that the gas may sandwich curtain-like liquid screens to securely displace a gas dissolved into a liquid.

Here, the gas displacing apparatus with an ejection port protector may further comprise the following constitution:
(4) said ejection port protector is made of a curved plate with its curved surface being convex upward, while said pipe for supplying a displacing gas is disposed in a manner that may expose said ejection port to the center of the curved plate.

In this case, it may further comprise the following constitution:
(5) said pipe for supplying a displacing gas is inserted into the container main body from the top center of said container main body.

The gas displacing apparatus with the constitutions (4) and (5) for the ejection port protector diffuses the displacing gas omnidirectionally along the upper side of the curved surface of the ejection port protector to be filled in the container main body, thereby supplying the displacing gas so as to spread into every corner inside the container main body.

Moreover, the gas displacing apparatus of the present invention may further comprise the following constitution:
(6) said gas discharging pipe is inserted into said container main body so as to penetrate through the side wall of said container main body at a position lower than a position where the baffle plate, to a rear surface of which said suction port faces, is attached.

The constitution (6) allows the gas discharging pipe to be disposed without interference from, if present, the ejection port protector.

Further, the gas displacing apparatus of the present invention may comprise the following constitution:
(7) a hole for the insertion of discharging pipe is formed on at least the uppermost baffle plate in said plural stage of the baffle plates to insert said gas discharging pipe, while said gas discharging pipe is disposed in a manner that may expose a suction port to a rear surface of the baffle plate in which the hole for the insertion of discharging pipe is formed.

The gas displacing apparatus with such constitution is capable of smoothly discharging gas without submerging a suction port of the gas discharging pipe into a puddle formed on the baffle plate in discharging gas from the container main body.

The gas displacing apparatus with this constitution (7) may comprise the following constitution:
(8) Holes for the insertion of pipe for supplying a displacing gas are formed to have said pipe for supplying a displacing gas extend through the uppermost baffle plate to a baffle plate lower than a baffle plate, to a rear surface of which the suction port of said gas discharging pipe faces, while the ejection port of said pipe for supplying a displacing gas is disposed in a manner that may face to a rear surface of the baffle plate lower than a baffle plate, to a rear surface of which the suction port of said gas discharging pipe faces.

Such constitution prevents the pipe for supplying a displacing gas from submerging in a puddle formed on the baffle plate.

The gas displacing apparatus with the constitution (7) may further comprise the following constitution:
(9) Said hole for the insertion of pipe for supplying a displacing gas is formed in a manner that said pipe for supplying a displacing gas may extend through the uppermost baffle plate to the lowermost baffle plate, while said pipe for supplying a displacing gas may expose an ejection port to a rear surface of the lowermost baffle plate.

Such constitution allows gas to be supplied to a rear surface of the lowermost baffle plate, thereby increasing the concentration of the displacing gas near a water surface in the container main body.

### Effect of the Invention

The present invention allows us to provide a gas displacing apparatus capable of securely discharging gas from a container main body. Further, the aspiration into the container main body may be securely implemented even when the liquid level should be changed.

### Brief Description of the Drawing(s)

Figure 1 is a plan view (A) and a cross-section taken through a-a (B) (including a perspective view of the baffle plate) of a gas displacing apparatus of Example 1.

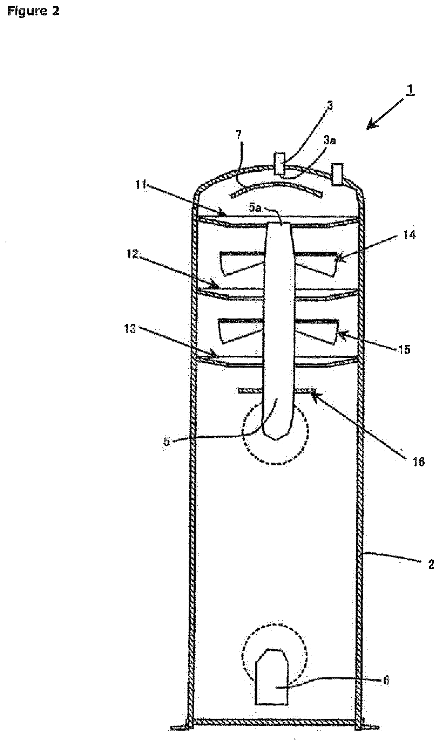

Figure 2 is a cross-section taken through a-a (A) and a cross-section taken through b-b (B) of a gas displacing apparatus of Example 1.
Figure 3 is a cross-section taken through a-a (A) in supplying a displacing gas and a cross-section taken through b-b (B) in discharging a gas of a gas displacing apparatus of Example 1.

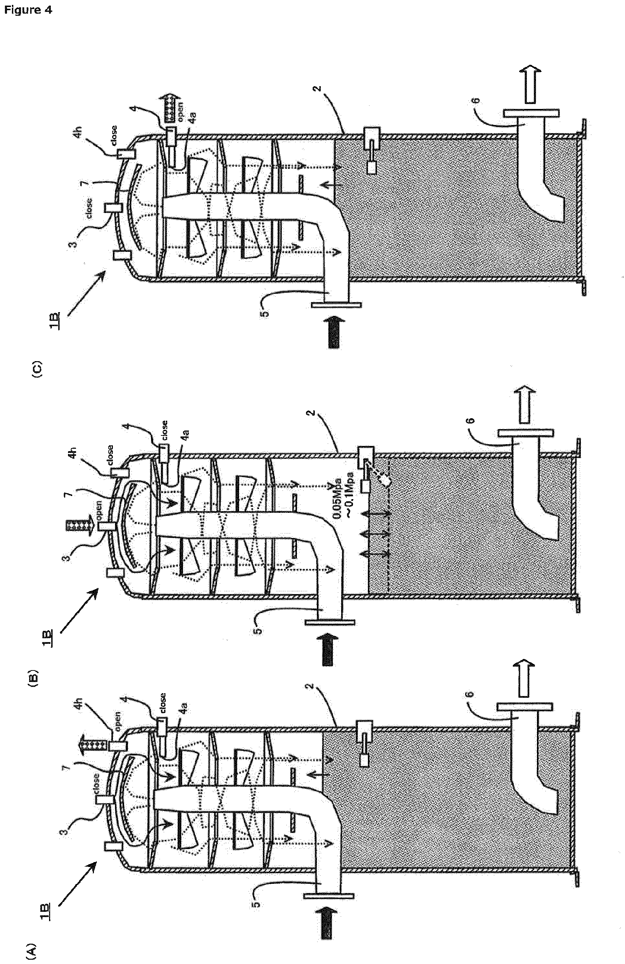

Figure 4 is a cross-section taken through a-a (A) in an initial operation state, a cross-section taken through a-a (B) in supplying a displacing gas and a cross-section taken through a-a (C) in discharging a gas of a gas displacing apparatus of Example 2.
Figure 5 is a cross-section taken through a-a (A) (including a perspective view of a baffle plate) and a cross-section taken through a-a (B) in supplying a displacing gas of a gas displacing apparatus of Example 3.
Figure 6 is a plan view (A) and a cross-section taken through a-a (B) (including a perspective view of the baffle plate) of a gas displacing apparatus of Example 4.
Figure 7 is a cross-section taken through a-a (A) and a cross-section taken through b-b (B) of a gas displacing apparatus of Example 4.
Figure 8 is a cross-section taken through a-a (A) in supplying a displacing gas, a cross-section taken through a-a (B) in supplying a displacing gas (where a part of liquid supplying pipe is omitted from a drawing) and a cross-section taken through a-a (C) in discharging a gas of a gas displacing apparatus of Example 4.
Figure 9 is a cross-section taken through a-a (A) and a cross-section taken through b-b (B) of a gas displacing apparatus of Example 5.
Figure 10 is a cross-section taken through a-a (A) and a cross-section taken through b-b (B) of a gas displacing apparatus of Example 6.

### Embodiment for Implementing the Invention

The embodiments for implementing the present invention are hereinafter illustrated on the basis of specific examples shown in the drawings.

### Example 1

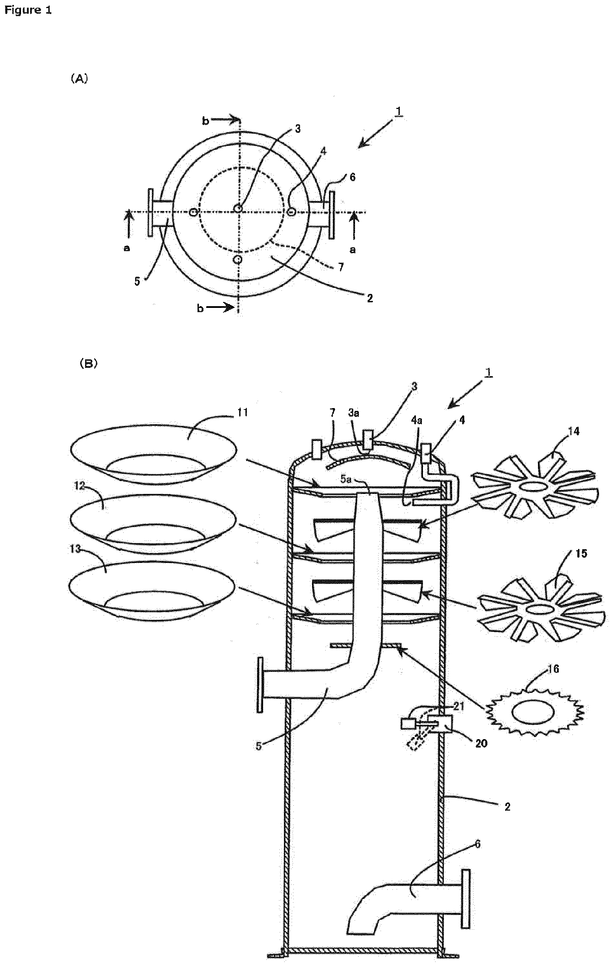

As shown in Figure 1, gas displacing apparatus 1 of Example 1 comprises: the container main body 2; the pipe 3 for supplying a displacing gas inserted through the center of the ceiling part of this container main body 2 for supplying gas to the container; the gas discharging pipe 4 inserted through the vicinity of the edge of the ceiling part for discharging gas in the container; the liquid supplying pipe 5 for supplying liquid to the container from approximately half the height of the side wall part; and the liquid discharging pipe 6 for discharging liquid in the container from the bottom part.

The liquid supplying pipe 5 is horizontally extended to the center part of the container, and flexed upward in the container to extend upward in a vertical direction so as to eject a liquid toward the upper portion of the container from the ejection nozzle 5a at the tip.

Above this liquid supplying pipe 5 arranged with a prescribed distance is the ejection port protector 7. Here, the ejection port protector 7 may be disposed in an appropriate method, including a method of hanging from the ceiling of the container main body 2 with an upright member, a method of supporting with a horizontal member extending from the side wall of the container main body 2 and a method of supporting with a support pillar extending from the top edge of the liquid supplying pipe 5. As shown in the drawing, the ejection port protector 7 is made of a curved plate whose curved surface is convex upward, while the pipe 3 for supplying a displacing gas is disposed in a manner that may expose its ejection port 3a to the center of the curved plate. As a result, the displacing gas ejected from the ejection port 3a of the pipe 3 for supplying a displacing gas is blown onto the upper surface of the ejection port protector 7 and flown into the inner volume of the container main body 2 from the circumference of the ejection port protector 7.

The ejection nozzle 5a of the liquid supplying pipe 5 has a tapered shape with its diameter being smaller towards the tip to increase the ejection pressure, as shown in the figure. Further, the liquid supplying pipe 5 is connected to a pump. This pump may have a discharge pressure of 0.1 MPa and a discharge rate of 35 L/min to 5 ton/min according to the intended use of the apparatus etc. Further, the pipe 3 for supplying a displacing gas comprises a mechanism for adjusting a supply pressure to adjust a supply pressure so as to feed a gas to the container main body at a pressure of 0.2 MPa. As a result, in the Examples, the gas enters into the container at a pressure 0.1 MPa higher than a liquid pressure to push down a liquid level in the container.

As aforementioned, the ejection port protector 7 is located above the ejection port 5a of liquid supplying pipe 5, thereby not allowing the ingress of a liquid squirted by a pump into the pipe 3 for supplying a displacing gas.

Ring-shaped baffle plates 11, 12 and 13 are attached to the inner wall of the container main body 2. The uppermost baffle plate 11 is attached at almost the same level as the tip of the ejection nozzle and made of a sloped ring sloped in an obliquely downward direction. The second and third stage baffle plates 12, 13 are also made of the same sloped ring as the uppermost baffle plate 11. The upper surfaces of the baffle plates 11 to 13 are sloped down, which causes suspended solids such as a piece of algae mixed in water pumped up with a pump from lake etc. to fall down along the slope, and thereby failing to deposit on the baffle plates 11 to 13.

To the vertical portion of the liquid supplying pipe 5 attached respectively are vaned baffle plates 14, 15 in a manner that have their tips enter into a space between the baffle plate 11 and the baffle plate 12 and a space between the baffle plate 12 and the baffle plate 13. The vanes of two vaned baffle plates 14, 15 are configured to be sloped in the opposite direction. Each vane of vaned baffle plates 14, 15 gives a twist in a manner that its slope angle gets larger as it approaches the tip from the base, as like a screw propeller of ships. As a result, gaps between vanes both in horizontal and vertical directions get wider from the base towards the tip. Such structural feature causes suspended solids in a liquid to be moved to the tip side of a vane without being remained at the base side of the vane, and the suspended solids fall together with the liquid, thereby avoiding the deposition on the vane. In addition, the small diameter baffle plate 16 with a jagged outer edge is installed at below the third stage ring-shaped baffle plate 13.

Gas discharging pipe 4 is once drawn out of the container main body 2 at above the baffle plate 11 and horizontally inserted again at below the baffle plate 11 into the container main body 2 so as to penetrate through the side wall of the container main body 2 in a manner that the pipe 4 may expose its suction port 4a to just below the rear surface of the uppermost baffle plate 11.

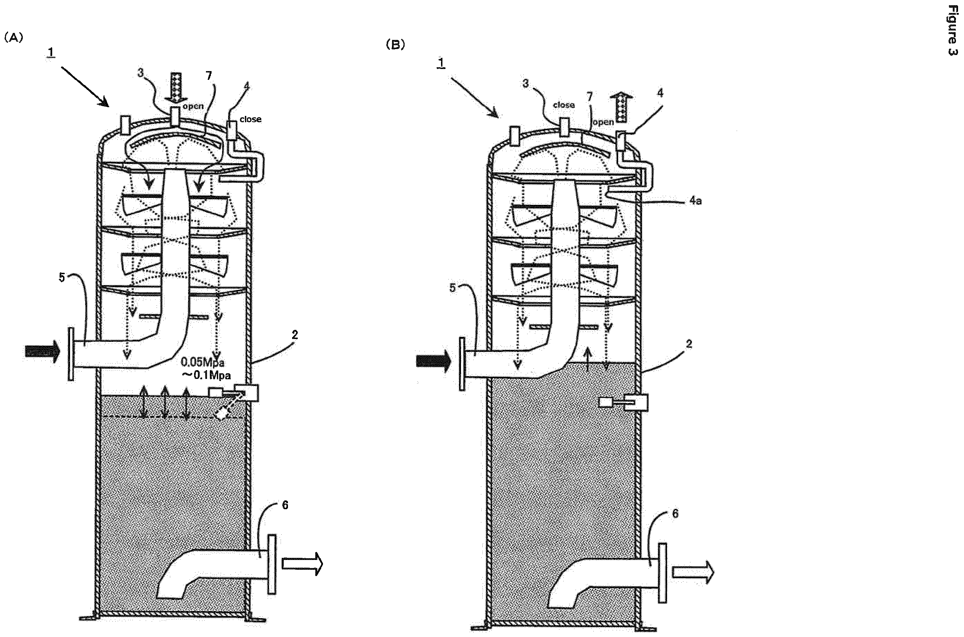

In the gas displacing apparatus 1, the baffle plates 11 to 15 cause a liquid ejected from the ejection nozzle 5a of the liquid supplying pipe 5 to flow on the upper surface of each baffle plate, followed by dropping down from the respective edges to form a curtain-like water screen, and finally falling down to the bottom of the container main body 2, as shown in Figure 3(A). As a result of the formation of this curtain-like water screen, both surfaces of the curtain-like water screen may be exposed to a displacing gas at a pressure of 0.05 to 0.1 MPa higher than a liquid to achieve the fall of the water screen in contact with the displacing gas over a large area. This may cause the displacing gas at a high pressure to interpose in a gap between water molecules, whereas a gas originally interposed in the gap between the water molecules may be displaced to conduct gas displacement.

At this point, the pipe 3 for supplying a displacing gas blows out a displacing gas from the upper space of the container main body partitioned by the ejection port protector 7 and supplies the displacing gas to the inner volume of the container main body 2 in a manner that may come around behind the ejection port protector 7 via the edge. At this point, the gas discharging pipe 4 is closed. Further, the amount of supplying a displacing gas is controlled so that a liquid level may be kept within a range of up-and-down motion of the float 21 of the float switch 20.

When the concentration of the displacing gas in the container main body 2 is decreased and a liquid level is elevated as the gas displacement progresses, gas inside the container main body 2 is discharged by closing the pipe 3 for supplying a displacing gas and opening the gas discharging pipe 4, as shown in Figure 3(B). At this point, the gas discharging pipe 4 exposes its suction port 4a to just below the rear surface of the uppermost baffle plate 11, thereby smoothly implementing the gas discharge even if a liquid is being ejected from the liquid supplying pipe 5.

### Example 2

As shown in Figure 3(A), gas displacing apparatus 1B of Example 2 is similar to Example 1 except that it installs the gas discharging pipe 4, the suction port 4a of which is exposed to just below the rear surface of the uppermost baffle plate 11, on the side wall of the container main body 2, and installs the manual-type gas discharging pipe 4h that allows us to manually open and close on the upper portion of the container main body 2. The gas displacing apparatus 1B of Example 2 initially supplies a liquid while discharging gas in the container main body 2 by opening the manual-type gas discharging pipe 4h as shown in Figure 3(A), and when the liquid may be injected to a liquid level to start operation, closes the manual-type gas discharging pipe 4h and blows out the displacing gas by opening the pipe 3 for supplying a displacing gas, as shown in Figure 3(B) to start gas displacement, and then repetitively transitions between the state (B) and the state (C) to bring effects similar to Example 1.

### Example 3

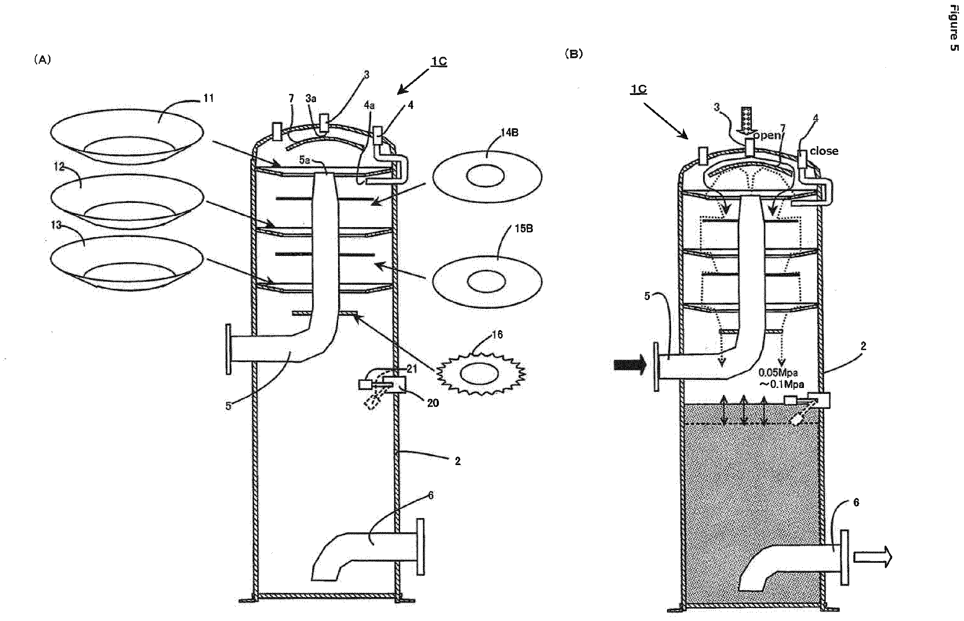

As shown in Figure 5(A), gas displacing apparatus 1C of Example 3 uses circular disks 14B, 15B in place of vaned baffle plates 14, 15 of Example 1. As shown in Figure 5(B), a multi-stage water screen as like a waterfall may be formed, although a spiral water screen is not formed by vane, and the gas displacement may be securely conducted as is similar to Example 1 without causing a problem of submerging the suction port 4a of the gas discharging pipe 4 into a puddle nor a problem of allowing the ingress of water into the ejection port 3a of the pipe 3 for supplying a displacing gas, as is similar to Example 1.

### Example 4

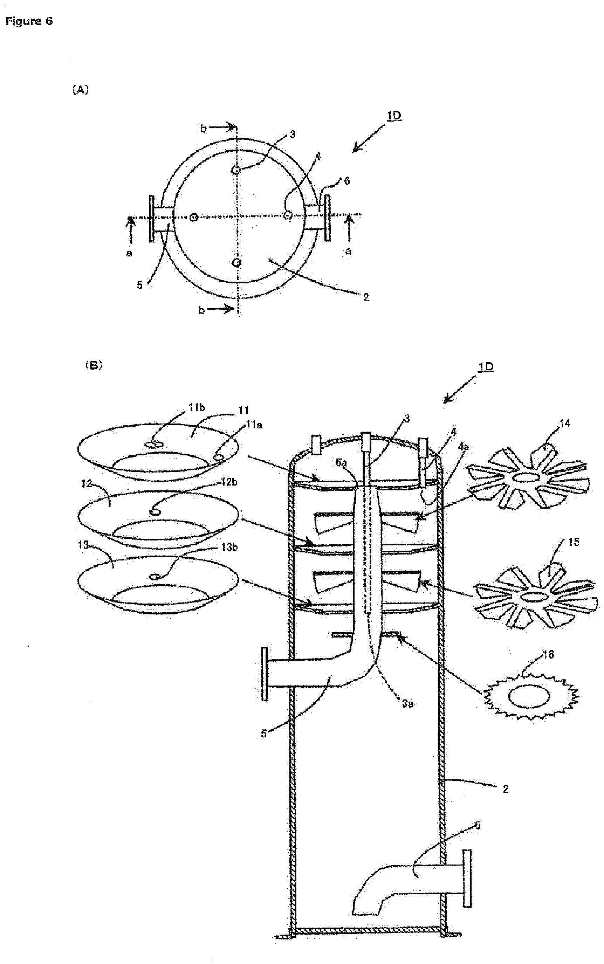

As shown in Figure 6(A), (B), gas displacing apparatus 1D of Example 4 comprises: the container main body 2; the pipe 3 for supplying a displacing gas for supplying gas to the container via the ceiling part of this container main body 2; the gas discharging pipe 4 for discharging gas in the container via the ceiling part; the liquid supplying pipe 5 for supplying liquid to the container from approximately half the height of the side wall part; and the liquid discharging pipe 6 for discharging liquid in the container from the bottom part. Further, as similar to Example 1, ring-shaped baffle plates 11, 12 and 13 are attached to the inner wall of the container main body 2, whereas To the vertical portion of the liquid supplying pipe 5 attached respectively are vaned baffle plates 14, 15 in a manner that have their tips enter into a space between the baffle plate 11 and the baffle plate 12 and a space between the baffle plate 12 and the baffle plate 13.

Differing from Example 1, the uppermost baffle plate 11 has the hole 11a for the insertion of gas discharging pipe 4 and the hole 11b for the insertion of pipe 3 to supply a displacing gas. Further, the second and third baffle plates 12,13 only have the holes 12b,13b for the insertion of pipe 3 to supply a displacing gas.

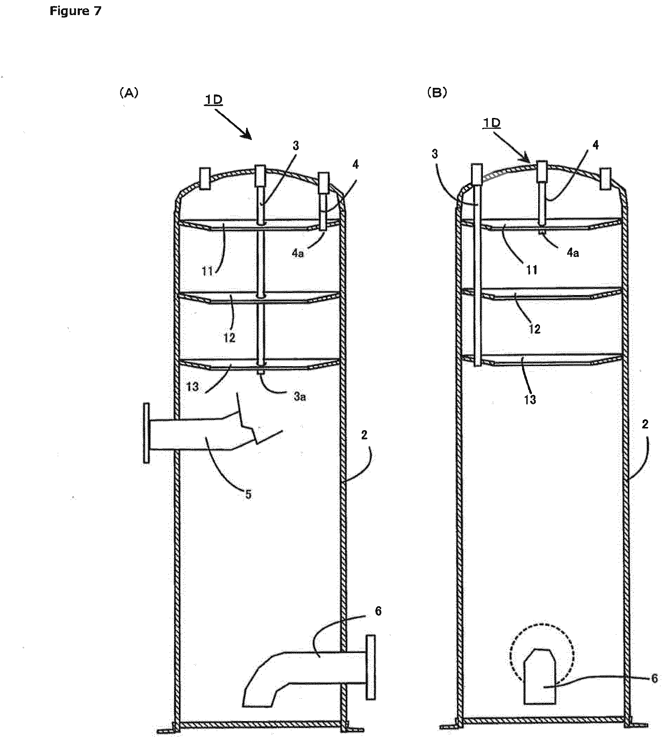

Further, as shown in Figure 7 (A), (B), the gas discharging pipe 4 is inserted through the hole 11a so that the pipe 4 may expose its suction port 4a to just below the rear surface of the uppermost baffle plate 11. As shown in Figure 7 (A), (B), the pipe 3 for supplying a displacing gas is inserted through the holes 11b to 13b for the insertion of a pipe to supply a displacing gas, so that the pipe 3 may expose its ejection port 3a to just below the rear surface of the lowermost (third stage) baffle plate 13.

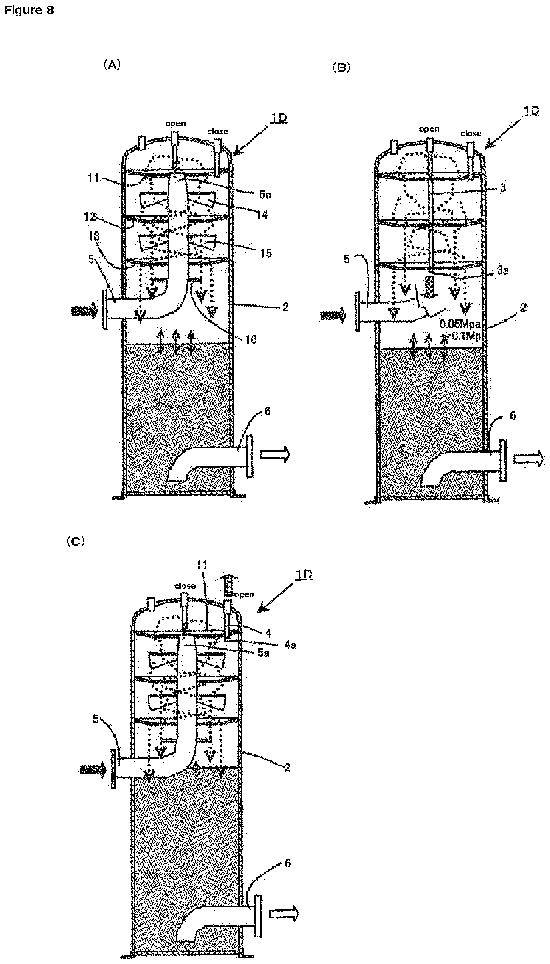

Again, as shown in Figure 8(A), (B), in the gas displacing apparatus of Example 4, a liquid ejected from the ejection nozzle 5a of the liquid supplying pipe 5 flows on the upper surface of each baffle plate and drop down from the respective edges to form a curtain-like water screen, and finally falling down to the bottom of the container main body 2. As a result of the formation of this curtain-like water screen, both surfaces of the curtain-like water screen may be exposed to a displacing gas at a pressure of 0.05 to 0.1 MPa higher than a liquid to achieve the fall of the water screen in contact with the displacing gas over a large area. This causes a pressurized displacing gas to interpose in a gap between water molecules, whereas a gas originally interposed in the gap between water molecules is displaced to conduct gas displacement.

As shown in Figure 8(C), when the concentration of the displacing gas in the container main body 2 is decreased and a liquid level is elevated as the gas displacing progresses, gas inside the container main body 2 is discharged by closing the pipe 3 for supplying a displacing gas and opening the gas discharging pipe 4. At this point, the gas discharging pipe 4 exposes its suction port 4a to just below the rear surface of the uppermost baffle plate 11, thereby smoothly implementing the gas discharge even if a liquid is being ejected from the liquid supplying pipe 5.

### Example 5

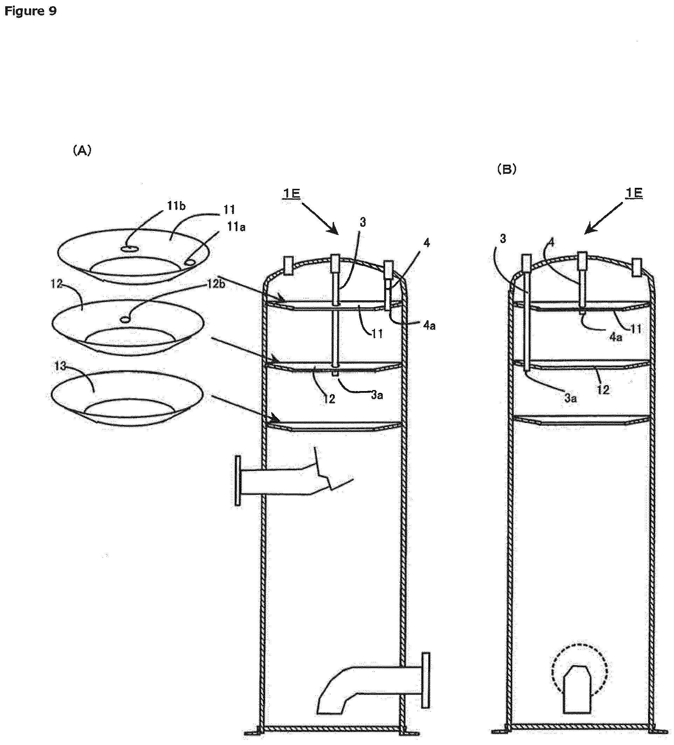

As shown in Figure 9, gas displacing apparatus 1E of Example 5 is similar to Example 4 except that it lacks hole for the insertion of pipe to supply a displacing gas in the third stage ring-shaped baffle plate 13 so that the pipe 3 for supplying a displacing gas may expose its ejection port 3a to just below the rear surface of the second stage baffle plate 12.

### Example 6

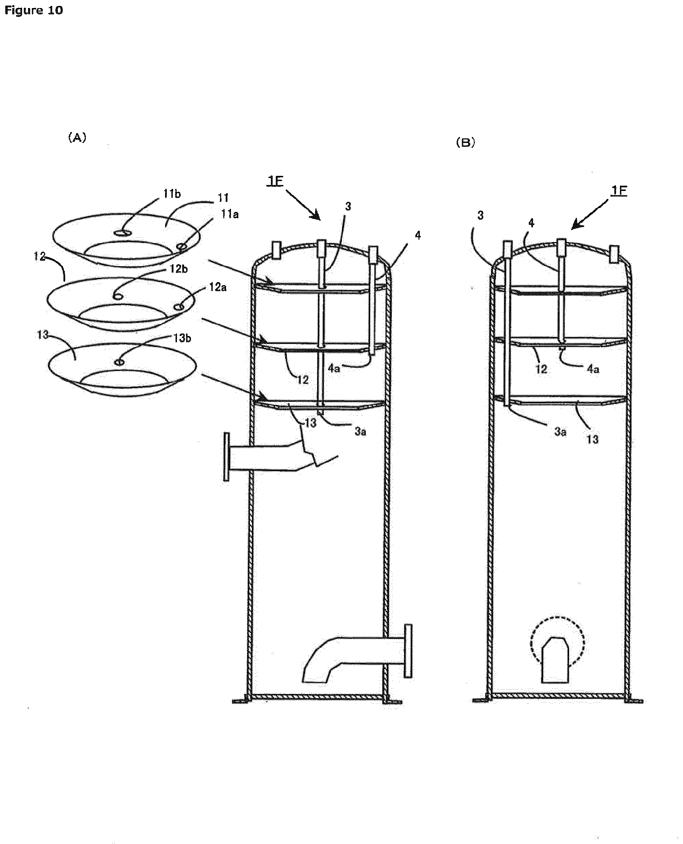

As shown in Figure 10, gas displacing apparatus 1F of Example 6 is similar to Example 4 except that it comprises hole 12a for the insertion of gas discharging pipe also in the second stage ring-shaped baffle plate 12 so that the gas discharging pipe 4 may expose its suction port 4a to just below the rear surface of the second stage baffle plate 12.

### Industrial Applicability

The present invention is applicable to the cleaning of lakes and rivers etc., the water quality management in aquaculture ponds of fishery products, the water quality management in algae cultivation tank, the cleaning of a cleaning liquid in factory and the production of ozone dissolved liquid or any other gas dissolved liquid.

### Explanation of Symbols

1, 1B, 1C, 1D, 1E and 1F: Gas displacing apparatus, 2: Container main body, 3: Pipe for supplying a displacing gas, 3a: Ejection port, 4: Gas discharging pipe, 4a: Suction port, 4h: Manual type gas discharging pipe, 5: Liquid supplying pipe, 5a: Ejection nozzle, 6: Liquid discharging pipe, 7: Ejection port protector, 11, 12, 13: Ring-shaped baffle plate, 11a, 12a: Hole for the insertion of gas discharging pipe, 11b, 12b, 13b: Hole for the insertion of pipe for supplying a displacing gas, 14, 15: Vaned baffle plate, 14B, 15B: Circular disk, 16: Small diameter baffle plate, 20: Float switch

## Claims

1. A gas displacing apparatus (1, 1B, 1C, 1D, 1E, 1F) comprising:
a container main body (2),
a liquid supplying pipe (5) for squirting liquid in an upward direction at the upper part inside said container main body (2), the liquid supplying pipe (5) being horizontally extended to a center part of the container main body (2) and flexed upward in the container extend upward in a vertical direction so as to eject a liquid toward the upper portion of the container main body (2) from an ejection nozzle (5a) at the tip,
a liquid discharging pipe (6) for discharging a liquid from the bottom part of said container main body (2),
plural stages of baffle plates (11, 12, 13, 14, 15, 14B, 15B) disposed in said container main body (2),
a pipe (3) for supplying a displacing gas to an inner volume of said container main body (2), and
a gas discharging pipe (4) for discharging gas from said container main body (2),
wherein the apparatus (1) is able to replace a gas dissolved into a liquid with said displacing gas by causing a liquid ejected from said liquid supplying pipe (5) to flow down said baffle plates (11, 12, 13, 14, 15, 14B, 15B) while being able to keep inner pressure of said container main body (2) at a level of no less than atmospheric pressure to form a curtain-like liquid screen in said container main body (2),
the apparatus further comprising the following constitution:
(1a) said baffle plates (11, 12, 13, 14, 15, 14B, 15B) include ring-shaped baffle plates (11, 12, 13) which are attached to the inner wall of the container main body (2), wherein:
the ring-shaped baffle plates (11, 12, 13) are made of a sloped ring sloped in an obliquely downward direction, and
the upper surfaces of the ring-shaped baffle plates (11, 12, 13) are sloped down suitable to cause suspended solids to fall down along the slope, and thereby failing to deposit on the ring-shaped baffle plates (11, 12, 13);
(1b) said baffle plates (11, 12, 13, 14, 15, 14B, 15B) further include vaned baffle plates (14, 15) or circular discs (14B, 15B) which are attached to a vertical portion of the liquid supplying pipe (5) in a manner that have their tips enter into a space between the ring-shaped baffle plates (11, 12, 13);
(1c) said gas discharging pipe (4) is disposed in a manner that exposes a suction port (4a) to just below a rear surface of any one of said ring-shaped baffle plates (11, 12, 13).

2. The gas displacing apparatus (1, 1B, 1C, 1D, 1E) of Claim 1, further comprising the following constitution:
(2) Said gas discharging pipe (4) is disposed in a manner that may expose said suction port (4a) to between the rear surface of the uppermost one (11) and the top position of the next one (12, 14 or 14B) of said ring-shaped baffle plates (11, 12, 13), said vaned baffle plates (14, 15) or said circular discs (14B, 15B).

3. The gas displacing apparatus (1, 1B, 1C) of Claim 2, further comprising the following constitution:
(3) An ejection port protector (7) is arranged above said liquid supplying pipe (5) with a prescribed gap, whereas said pipe (3) for supplying a displacing gas is disposed in a manner that may expose its ejection port (3a) to an upper surface of the ejection port protector (7) to feed said displacing gas from the circumference of said ejection port protector (7) into said container main body (2).
(4) Said ejection port protector (7) is made of a curved plate with its curved surface being convex upward, while said pipe (3) for supplying a displacing gas is disposed in a manner that may expose said ejection port (3a) to the center of the curved plate.
(5) Said pipe (4) for supplying a displacing gas is inserted into the container main body (2) from the top center of said container main body (2).
(6) Said gas discharging pipe (4) is inserted into said container main body (2) so as to penetrate through the side wall of said container main body (2) at a position lower than a position where the uppermost baffle plate (11), to a rear surface of which said suction port (4a) faces, is attached.

4. The gas displacing apparatus (1D, 1E, 1F) of Claim 1, further comprising the following constitution:
(7) A hole (11a) for the insertion of discharging pipe (4) is formed on at least the uppermost ring-shaped baffle plate (11) in said plural stage of the ring-shaped baffle plates (11, 12, 13) to insert said gas discharging pipe (4), while said gas discharging pipe (4) is disposed in a manner that may expose a suction port (4a) to a rear surface of the baffle plate (11, 12) in which the hole (11a, 12a) for the insertion of discharging pipe (4) is formed.
(8) Holes (11b, 12b, 13b) for the insertion of pipe (3) for supplying a displacing gas are formed to have said pipe for supplying a displacing gas extend through the uppermost ring-shaped baffle plate (11) to a ring-shaped baffle plate (12), (13) lower than a baffle plate (11, 12), to a rear surface of which the suction port (4a) of said gas discharging pipe (4) faces, while the ejection port (3a) of said pipe (3) for supplying a displacing gas is disposed in a manner that may face to a rear surface of the ring-shaped baffle plate (12, 13) lower than a baffle plate (11, 12), to a rear surface of which the suction port (4a) of said gas discharging pipe (4) faces.

5. The gas displacing apparatus (1D, 1F) of Claim 4, further comprising the following constitution:
(9) Said holes (11b, 12b, 13b) for the insertion of pipe (3) for supplying a displacing gas are formed in a manner that said pipe (3) for supplying a displacing gas may extend through the uppermost ring-shaped baffle plate (11) to the lowermost ring-shaped baffle plate (13), while said pipe (3) for supplying a displacing gas may expose an ejection port (3a) to a rear surface of the lowermost ring-shaped baffle plate (13).

## Patentansprüche

1. Gasverdrängungsvorrichtung (1, 1B, 1C, 1D, 1E, 1F), aufweisend:
einen Behälterhauptkörper (2),
ein Flüssigkeitszuleitungsrohr (5) zum Spritzen von Flüssigkeit in einer Aufwärtsrichtung an einem oberen Teil innerhalb des Behälterhauptkörpers (2), wobei sich das Flüssigkeitszuleitungsrohr (5) horizontal bis zu einem mittleren Teil des Behälterhauptkörpers (2) erstreckt und in dem Behälter in einer vertikalen Richtung aufwärts gebogen ist, so dass es eine Flüssigkeit aus einer Strahldüse (5a) an einer Spitze zu einem oberen Abschnitt des Behälterhauptkörpers (2) auswirft,
ein Flüssigkeitsableitungsrohr (6) zum Ableiten einer Flüssigkeit aus dem unteren Teil des Behälterhauptkörpers (2),
mehrere Stufen von Ablenkplatten (11, 12, 13, 14, 15, 14B, 15B), die in dem Behälterhauptkörper (2) angeordnet sind,
ein Rohr (3) zum Zuleiten eines Verdrängungsgases in ein Innenvolumen des Behälterhauptkörpers (2) und
ein Gasableitungsrohr (4) zum Ableiten von Gas aus dem Behälterhauptkörper (2), wobei die Vorrichtung (1) in der Lage ist, ein Gas, das in einer Flüssigkeit gelöst ist, durch das Verdrängungsgas zu ersetzen, indem sie bewirkt, dass eine Flüssigkeit, die aus dem Flüssigkeitszuleitungsrohr (5) ausgestoßen wird, an den Ablenkplatten (11, 12, 13, 14, 15, 14B, 15B) hinabfließt, während sie gleichzeitig in der Lage ist, einen Innendruck des Behälterhauptkörpers (2) auf einem Pegel von mindestens Atmosphärendruck zu halten, um einen vorhangartigen Flüssigkeitsschirm in dem Behälterhauptkörper (2) auszubilden,
wobei die Vorrichtung ferner die folgenden Merkmale aufweist:
(1a) die Ablenkplatten (11, 12, 13, 14, 15, 14B, 15B) schließen ringförmige Ablenkplatten (11, 12, 13) ein, die an der Innenwand des Behälterhauptkörpers (2) angebracht sind, wobei:
die ringförmigen Ablenkplatten (11, 12, 13) aus einem schrägen Ring gefertigt sind, der in einer abwärts geneigten Richtung schräg ist, und
die oberen Oberflächen der ringförmigen Ablenkplatten (11, 12, 13) auf geeignete Weise schräg nach unten geneigt sind, um zu bewirken, dass schwebende Feststoffe entlang der Schräge abwärts fallen und dadurch nicht in der Lage sind, sich an den ringförmigen Ablenkplatten (11, 12, 13) anzulagern;
(1b) wobei die Ablenkplatten (11, 12, 13, 14, 15, 14B, 15B) ferner mit Flügeln versehende Ablenkplatten (14, 15) oder kreisförmige Scheiben (14B, 15B) einschließen, die an einem vertikalen Abschnitt des Flüssigkeitszuleitungsrohrs (5) auf solche Weise angebracht sind, dass ihre äußeren Enden in einen Raum zwischen den ringförmigen Ablenkplatten (11, 12, 13) hineinragen;
(1c) wobei das Gasableitungsrohr (4) auf solche Weise angeordnet ist, dass es eine Ansaugöffnung (4a) unmittelbar unterhalb einer hinteren Oberfläche von irgendeiner der ringförmigen Ablenkplatten (11, 12, 13) exponiert.

2. Gasverdrängungsvorrichtung (1, 1B, 1C, 1D, 1E, 1F) nach Anspruch 1, ferner die folgenden Merkmale aufweisend:
(2) das Gasableitungsrohr (4) ist auf solche Weise angeordnet, dass es die Ansaugöffnung (4a) zwischen der hinteren Oberfläche der obersten (11) und der oberen Position der als nächstes folgenden (12, 14, oder 14B) von den ringförmigen Ablenkplatten (11, 12, 13), den mit Flügeln versehenen Ablenkplatten (14, 15) oder den kreisförmigen Scheiben (14B, 15B) exponieren kann.

3. Gasverdrängungsvorrichtung (1, 1B, 1C) nach Anspruch 2, ferner die folgenden Merkmale aufweisend:
(3) ein Ausstoßöffnungsschutz (7) ist mit einem vorgegebenen Abstand oberhalb des Flüssigkeitszuleitungsrohrs (5) angeordnet, wohingegen das Rohr (3) für die Zuleitung von Verdrängungsgas auf solche Weise angeordnet ist, dass seine Ausstoßöffnung (3a) einer oberen Oberfläche des Ausstoßöffnungsschutzes (7) gegenüber exponiert ist, um das Verdrängungsgas aus dem Umkreis des Ausstoßöffnungsschutzes (7) in den Behälterhauptkörper (2) einzuspeisen;
(4) der Ausstoßöffnungsschutz (7) ist aus einer gekrümmten Platte gefertigt, deren gekrümmte Oberfläche aufwärts gewölbt ist, während das Rohr (3) für die Zuleitung eines Verdrängungsgases auf solche Weise angeordnet ist, dass die Ausstoßöffnung (3a) der Mitte der gekrümmten Platte gegenüber exponiert ist;
(5) das Rohr (4) für die Zuleitung eines Verdrängungsgases ist von der oberen Mitte des Behälterhauptkörpers (2) aus in den Behälterhauptkörper (2) eingeführt;
(6) das Gasableitungsrohr (4) ist so in den Behälterhauptkörper (2) eingeführt, dass es an einer Position, die niedriger ist als eine Position, wo die oberste Ablenkplatte (11) befestigt ist, deren hinterer Oberfläche die Ansaugöffnung (4a) gegenüberliegt, durch die Seitenwand des Behälterhauptkörpers (2) hindurch verläuft.

4. Gasverdrängungsvorrichtung (1D, 1E, 1F) nach Anspruch 1, ferner die folgenden Merkmale aufweisend:
(7) ein Loch (11a) für die Einführung des Ableitungsrohrs (4) ist zumindest an der obersten ringförmigen Ablenkplatte (11) in den mehreren Stufen von ringförmigen Ablenkplatten (11, 12, 13) ausgebildet, um das Gasableitungsrohr (4) einzuführen, während das Gasableitungsrohr (4) auf solche Weise angeordnet ist, dass eine Ansaugöffnung (4a) einer hinteren Oberfläche der Ablenkplatte (11, 12), in der das Loch (11a, 12a) zum Einführen des Ableitungsrohrs (4) ausgebildet ist, gegenüber exponiert sein kann;
(8) Löcher (11b, 12b, 13b) zum Einführen des Rohrs (3) zum Zuleiten eines Verdrängungsgases sind so ausgebildet, dass das Rohr für die Zuleitung von Verdrängungsgas durch die oberste ringförmige Ablenkplatte (11) zu einer ringförmigen Ablenkplatte (12, 13) verläuft, die niedriger liegt als eine Ablenkplatte (11, 12), deren hinterer Oberfläche die Ansaugöffnung (4a) des Gasableitungsrohrs (4) gegenüberliegt, während die Ausstoßöffnung (3a) des Rohrs (3) für die Zuleitung eines Verdrängungsgases auf solche Weise angeordnet ist, dass sie einer hinteren Oberfläche der ringförmigen Ablenkplatte (12, 13) gegenüberliegt, die niedriger liegt als eine Ablenkplatte (11, 12), deren hinterer Oberfläche die Ansaugöffnung (4a) des Gasableitungsrohrs (4) gegenüberliegt.

5. Gasverdrängungsvorrichtung (1D, 1F) nach Anspruch 4, ferner die folgenden Merkmale aufweisend:
(9) die Löcher (11b, 12b, 13b) zum Einführen des Rohrs (3) zum Zuleiten eines Verdrängungsgases sind so ausgebildet, dass das Rohr (3) zum Zuleitung eines Verdrängungsgases durch die oberste ringförmige Ablenkplatte (11) zur untersten ringförmigen Ablenkplatte (13) verläuft, während das Rohr (3) zum Zuleiten eines Verdrängungsgases eine Ausstoßöffnung einer hinteren Oberfläche der untersten ringförmigen Ablenkplatte (13) gegenüber exponieren kann.

## Revendications

1. Appareil de déplacement de gaz (1, 1B, 1C, 1D, 1E, 1F) comprenant :
un corps principal de conteneur (2),
un tuyau d'alimentation en liquide (5) pour faire jaillir du liquide dans une direction vers le haut au niveau de la partie supérieure à l'intérieur dudit corps principal de conteneur (2), le tuyau d'alimentation en liquide (5) étant étendu horizontalement vers une partie centrale du corps principal de conteneur (2) et plié vers le haut dans le conteneur pour s'étendre vers le haut dans une direction verticale de manière à éjecter un liquide vers la portion supérieure du corps principal de conteneur (2) depuis une buse d'éjection (5a) au niveau du bout,
un tuyau de déversement de liquide (6) pour déverser un liquide depuis la partie inférieure dudit corps principal de conteneur (2),
plusieurs étages de plaques de déflexion (11, 12, 13, 14, 15, 14B, 15B) disposées dans ledit corps principal de conteneur (2),
un tuyau (3) pour fournir un gaz de déplacement à un volume intérieur dudit corps principal de conteneur (2), et
un tuyau de déversement de gaz (4) pour déverser du gaz depuis ledit corps principal de conteneur (2),
dans lequel l'appareil (1) est capable de remplacer un gaz dissous dans un liquide par ledit gaz de déplacement en amenant un liquide éjecté dudit tuyau d'alimentation en liquide (5) à s'écouler vers le bas le long desdites plaques de déflexion (11, 12, 13, 14, 15, 14B, 15B) tout en étant capable de maintenir une pression intérieure dudit corps principal de conteneur (2) à un niveau non inférieur à la pression atmosphérique pour former un écran de liquide ressemblant à un rideau dans ledit corps principal de conteneur (2),
l'appareil comprenant en outre la constitution suivante :
(1a) lesdites plaques de déflexion (11, 12, 13, 14, 15, 14B, 15B) incluent des plaques de déflexion en forme d'anneau (11, 12, 13) qui sont attachées à la paroi intérieure du corps principal de conteneur (2), dans lequel :
les plaques de déflexion en forme d'anneau (11, 12, 13) sont faites d'un anneau incliné qui est incliné dans une direction obliquement vers le bas, et
les surfaces supérieures des plaques de déflexion en forme d'anneau (11, 12, 13) sont inclinées vers le bas adéquates pour amener des solides en suspension à tomber le long de la pente, et échouant ainsi à se déposer sur les plaques de déflexion en forme d'anneau (11, 12, 13) ;
(1b) lesdites plaques de déflexion (11, 12, 13, 14, 15, 14B, 15B) incluent en outre des plaques de déflexion à aubes (14, 15) ou des disques circulaires (14B, 15B) qui sont attachés à une portion verticale du tuyau d'alimentation en liquide (5) de manière à ce que leurs bouts entrent dans un espace entre les plaques de déflexion en forme d'anneau (11, 12, 13) ;
(1c) ledit tuyau de déversement de gaz (4) est disposé de manière à exposer un orifice d'aspiration (4a) à juste sous une surface arrière d'une quelconque desdites plaques de déflexion en forme d'anneau (11, 12, 13).

2. Appareil de déplacement de gaz (1, 1B, 1C, 1D, 1E) selon la revendication 1, comprenant en outre la constitution suivante :
(2) ledit tuyau de déversement de gaz (4) est disposé de manière à pouvoir exposer ledit orifice d'aspiration (4a) à entre la surface arrière du plus haut/de la plus haute (11) et la position supérieure du suivant/de la suivante (12, 14 ou 14B) desdites plaques de déflexion en forme d'anneau (11, 12, 13), desdites plaques de déflexion à aubes (14, 15) ou desdits disques circulaires (14B, 15B).

3. Appareil de déplacement de gaz (1, 1B, 1C) selon la revendication 2, comprenant en outre la constitution suivante :
(3) un dispositif de protection d'orifice d'éjection (7) est agencé au-dessus dudit tuyau d'alimentation en liquide (5) avec un écart prescrit, tandis que ledit tuyau (3) pour fournir un gaz de déplacement est disposé de manière à pouvoir exposer son orifice d'éjection (3a) à une surface supérieure du dispositif de protection d'orifice d'éjection (7) pour introduire ledit gaz de déplacement depuis la circonférence dudit dispositif de protection d'orifice d'éjection (7) dans ledit corps principal de conteneur (2),
(4) ledit dispositif de protection d'orifice d'éjection (7) est fait d'une plaque incurvée avec sa surface incurvée étant convexe vers le haut, tandis que ledit tuyau (3) pour fournir un gaz de déplacement est disposé de manière à pouvoir exposer ledit orifice d'éjection (3a) au centre de la plaque incurvée,
(5) ledit tuyau (4) pour fournir un gaz de déplacement est inséré dans le corps principal de conteneur (2) depuis le centre supérieur dudit corps principal de conteneur (2),
(6) ledit tuyau de déversement de gaz (4) est inséré dans ledit corps principal de conteneur (2) de manière à pénétrer à travers la paroi latérale dudit corps principal de conteneur (2) au niveau d'une position inférieure à une position où la plaque de déflexion la plus haute (11), à une surface arrière de laquelle ledit orifice d'aspiration (4a) fait face, est attachée.

4. Appareil de déplacement de gaz(1D, 1E, 1F) selon la revendication 1, comprenant en outre la constitution suivante :
(7) un trou (11a) pour l'insertion d'un tuyau de déversement (4) est formé sur au moins la plaque de déflexion en forme d'anneau la plus haute (11) dans lesdits plusieurs étages des plaques de déflexion en forme d'anneau (11, 12, 13) pour insérer ledit tuyau de déversement de gaz (4), tandis que ledit tuyau de déversement de gaz (4) est disposé de manière à pouvoir exposer un orifice d'aspiration (4a) à une surface arrière de la plaque de déflexion (11, 12) dans laquelle le trou (11a, 12a) pour l'insertion d'un tuyau de déversement (4) est formé,
(8) des trous (11b, 12b, 13b) pour l'insertion d'un tuyau (3) pour fournir un gaz de déplacement sont formés pour que ledit tuyau pour fournir un gaz de déplacement s'étende à travers la plaque de déflexion en forme d'anneau la plus haute (11) vers une plaque de déflexion en forme d'anneau (12), (13) inférieure à une plaque de déflexion (11, 12), à une surface arrière de laquelle l'orifice d'aspiration (4a) dudit tuyau de déversement de gaz (4) fait face, tandis que l'orifice d'éjection (3a) dudit tuyau (3) pour fournir un gaz de déplacement est disposé de manière à pouvoir faire face à une surface arrière de la plaque de déflexion en forme d'anneau (12, 13) inférieure à une plaque de déflexion (11, 12), à une surface arrière de laquelle l'orifice d'aspiration (4a) dudit tuyau de déversement de gaz (4) fait face.

5. Appareil de déplacement de gaz (1D, 1F) selon la revendication 4, comprenant en outre la constitution suivante :
(9) lesdits trous (11b, 12b, 13b) pour l'insertion d'un tuyau (3) pour fournir un gaz de déplacement sont formés de manière à ce que ledit tuyau (3) pour fournir un gaz de déplacement puisse s'étendre à travers la plaque de déflexion en forme d'anneau la plus haute (11) vers la plaque de déflexion en forme d'anneau la plus basse (13), tandis que ledit tuyau (3) pour fournir un gaz de déplacement peut exposer un orifice d'éjection (3a) à une surface arrière de la plaque de déflexion en forme d'anneau la plus basse (13).
